(19) Europäisches Patentamt
European Patent Office
Office européen des brevets

(11) **EP 1 914 515 A2**

(12) **EUROPEAN PATENT APPLICATION**

(43) Date of publication:
**23.04.2008 Bulletin 2008/17**

(51) Int Cl.:
***G01C 21/34*** *(2006.01)*

(21) Application number: **07118572.2**

(22) Date of filing: **16.10.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK RS**<br><br>(30) Priority: **17.10.2006 KR 20060100857** | (71) Applicant: **LG ELECTRONICS INC.**<br>**Seoul 150-721 (KR)**<br><br>(72) Inventor: **Choi, Byung Moon**<br>**451-713, Pyeongtaek-si, Gyeonggi-do (KR)**<br><br>(74) Representative: **Vossius & Partner**<br>**Siebertstrasse 4**<br>**81675 München (DE)** |

(54) **Navigation apparatus and route re-search method thereof**

(57)    The present invention relates to a route re-search method of a navigation apparatus, and more particularly, to a route re-search method, wherein when a route is re-searched for, the location at the completion time of the re-search is estimated and a route is re-searched for from the estimated location. A navigation apparatus according to the present invention comprises a GPS receiving unit 10 for receiving GPS satellite signals and calculating current location; a data storage unit 40 for storing map information and information on route search time versus distance; and a main controller 50 for re-searching for a route using the route search time versus distance. At this time, if re-search for a route is requested, the main controller 50 searches for re-search time corresponding to re-search distance from the search information storage portion, estimates location after the re-search time based on current moving velocity, and re-searches for a route that starts from the location. According to the present invention, when re-searching for a route, the navigation apparatus re-searches for a route that starts from a point where re-searching the route is completed, whereby it is advantageous that a correct route can be re-set although the navigation apparatus moves while the route is re-searched for.

FIG 2

**Description**

The present invention relates to a route re-search method of a navigation apparatus, and more particularly, to a route re-search method, wherein when a route is re-searched for, the location at the completion time of the re-search is estimated and a route is re-searched for from the estimated location.

A navigation apparatus is an apparatus that receives signals from a plurality of satellites, calculates its current location, and displays the calculated location on a stored map to inform a user. Further, the navigation apparatus receives a destination, searches for a route to the destination, and informs the user of the searched route, thereby enabling the user to arrive at the destination.

If the current location is deviated from the searched route, such a navigation apparatus re-searches for a route from the point of deviation to the destination and informs the user of the re-searched route. Hereinafter, a route re-search method of the navigation apparatus will be described in detail with reference to the accompanying drawings.

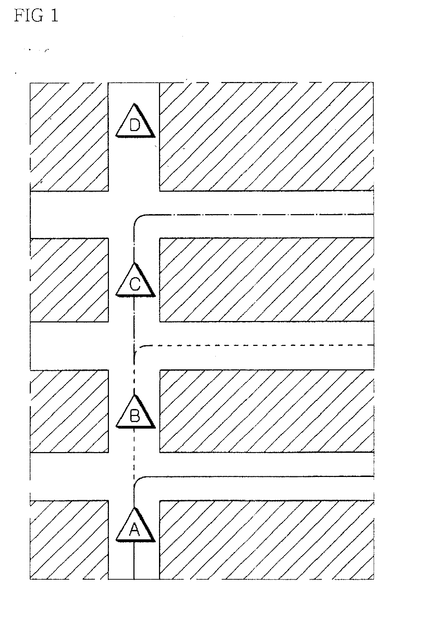

Fig. 1 is a view showing an example in which a conventional navigation apparatus re-searches for a route.

As shown in the figure, a user sets a route and drives along the route. At this time, the location of the navigation apparatus is "A", and the route is displayed as a solid line.

If the navigation apparatus deviates from the route and arrives at location "B" while driving along the route of the solid line, the navigation apparatus determines that it is deviated from the route and re-searches for a new route. At this time, the re-searching for a new route starts from the location "B" where the navigation apparatus is determined to have deviated from the route. The re-searched route is displayed as a dotted line.

However, a certain period of time is required when the navigation apparatus re-searches for a route. That is, the longer the re-search route is, the more the re-search time is required. At worst, it takes more than 40 seconds (in case of a long route, such as from Seoul to Busan).

While the navigation apparatus re-searches for a route, the location of the navigation apparatus is changed since the vehicle mounted with the navigation apparatus continuously moves with traffic flow on a road. If a route is re-searched for from the location "B" of Fig. 1, the location of the navigation apparatus is changed to location "C" when the route re-searching is completed. At this time, the re-searched route is the dotted line as shown in the figure, and the location of the navigation apparatus is already deviated from the re-searched route.

Accordingly, the navigation apparatus re-searches for a route again from the location "C", and the navigation apparatus moves to location "D" again. At this time, the re-searched route is displayed as a dashed dot line. Therefore, the navigation apparatus deviates from the re-searched route again.

Accordingly, the above prior art has the following problems.

That is, when the navigation apparatus re-searches for a route, the navigation apparatus moves while the navigation apparatus re-searches for a route. Therefore, there is a problem in that a route is re-searched for while the navigation apparatus already deviates from the re-searched route.

Accordingly, the present invention is conceived to solve the aforementioned problems in the prior art. An object of the present invention is to provide a navigation apparatus and a route re-search method thereof, wherein when re-searching for a route, the navigation apparatus re-searches for a route that starts from the location after the completion of the re-search.

According to an aspect of the present invention for achieving the objects, there is provided a navigation apparatus, comprising a GPS receiving unit for receiving GPS satellite signals and calculating current location; a data storage unit for storing map information and information on route search time versus distance; and a main controller for re-searching for a route using the route search time versus distance.

Here, the data storage unit may comprise a map storage portion for storing the map information, and a search information storage portion for storing the route search time versus distance.

In addition, if re-search for a route is requested, the main controller may search for re-search time corresponding to re-search distance from the search information storage portion, estimate location after the re-search time based on current moving velocity, and re-search for a route that starts from the location.

In the meantime, according to another aspect of the present invention, there is provided a navigation apparatus, comprising: a GPS receiving unit for receiving GPS satellite signals and calculating current location; a data storage unit for storing map information and information on route search time versus distance; a buffer memory for storing a searched route from a point where there is a concern about route deviation to a destination; and a main controller for re-setting a searched route to the route stored in the buffer memory when the route deviation is occurred.

At this time, if the point where there is a concern about route deviation exists within a set distance, the main controller may search for a new virtual path from the route deviation point and store the virtual path in the buffer memory.

Here, the point where there is a concern about route deviation may be set to include at least any one of a right turning point existing at a crossroad, a left turning point existing at a crossroad, and a U-turn point.

In the meantime, according to a further aspect of the present invention, there is provided a route search method of a navigation apparatus, comprising the steps of: (a) receiving a route re-search request; (b) searching for re-search time according to remaining distance; (c) estimating location after the re-search time based on moving velocity; (d) re-searching for a route from the estimated location to a destination; and (e) displaying the re-searched route through a display unit.

Here, step (b) may comprise the steps of (b1) calculating the remaining distance when a route is re-searched for, and (b2) calculating the re-search time from the remaining distance.

At this time, the re-search time in step (b) may be calculated from a time information table that is defined by experimental values and stored in a search information storage portion.

In addition, the time information table is preferably stored while being divided according to cases of a short distance search and a long distance search.

The re-search time in step (b) may also be calculated by a function defined by experimental values.

At this time, the function may be T = ax + b, in which T denotes re-search time, x denotes re-search distance, and a and b are constants calculated by experiments.

Further, each of the constants a and b may be defined differently depending on x values of a short distance and a long distance.

Meanwhile, the route re-search request in step (a) may be issued when current location is deviated from a searched route by more than an allowable value.

The navigation apparatus may be any one of a PDA, a portable terminal, a mobile PC and a GPS receiver having a navigation function.

In the meantime, according to a still further aspect of the present invention, there is provided a route search method of a navigation apparatus, comprising the steps of: (A) determining whether a point where there is a concern about route deviation exists within a set distance; (B) searching for a virtual path from a virtual point to a destination, the virtual point being appointed to be the point where there is a concern about route deviation ; (C) storing the virtual path; (D) examining whether current location of the navigation apparatus moves on the virtual path; and (E) setting a search route to the virtual path when the navigation apparatus moves on the virtual path.

At this time, the virtual point may be the point where there is a concern about route deviation, or a point spaced apart from the point where there is a concern about route deviation by a predetermined distance in a previous moving direction.

In addition, the virtual path may be stored in a buffer memory.

According to the present invention, when re-searching for a route, the navigation apparatus re-searches for a route that starts from a point where re-searching the route is completed, whereby it is advantageous that a correct route can be re-set although the navigation apparatus moves while the route is re-searched for.

The above and other objects, features and advantages of the present invention will become apparent from the following description of preferred embodiments given in conjunction with the accompanying drawings, in which:

Fig. 1 is a view showing an example in which a conventional navigation apparatus re-searches for a route;
Fig. 2 is a block diagram showing the configuration of a navigation apparatus according to a preferred embodiment of the present invention;
Fig. 3 is a flowchart illustrating a route re-search method according to the preferred embodiment of the present invention;
Fig. 4 is a flowchart illustrating in detail a method of calculating re-search time according to the preferred embodiment of the present invention;
Fig. 5 is a flowchart illustrating in detail another method of calculating re-search time according to the preferred embodiment of the present invention;
Fig. 6 is a view showing an example of re-searching for a route according to the preferred embodiment of the present invention;
Fig. 7 is a flowchart illustrating a route search method according to another embodiment of the present invention; and
Fig. 8 is an exemplary view showing the operation of the other embodiment of the present invention.

Hereinafter, preferred embodiments of a navigation apparatus and a route re-search method thereof according to the present invention will be described in more detail with reference to the accompanying drawings.

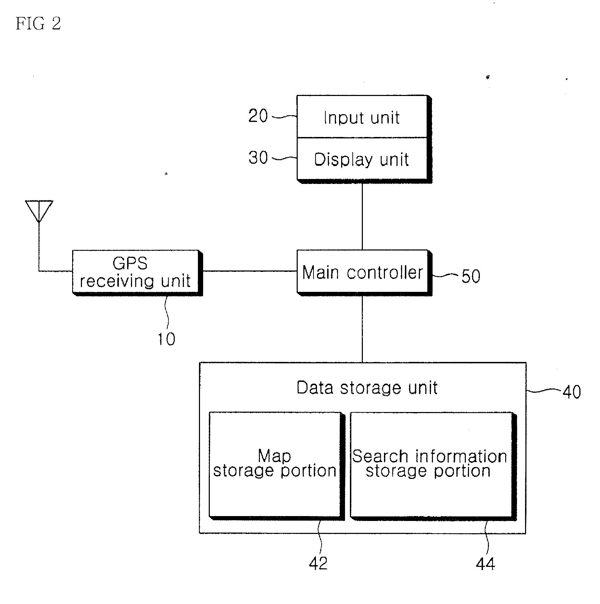

Fig. 2 is a block diagram showing the configuration of a navigation apparatus according to a preferred embodiment of the present invention.

As shown in the figure, the navigation apparatus according to the present invention comprises a GPS receiving unit 10. The GPS receiving unit 10, which is a unit for receiving GPS signals form GPS satellites, is connected to a main controller 50, which will be described below, and transfers the received GPS signals to the main controller 50.

In the meantime, the navigation apparatus according to the present invention comprises an input unit 20 for receiving commands from a user, and a display unit 30 for displaying processing results of the navigation apparatus to the user. The input unit 20 and the display unit 30 can be separately provided. However, it is preferred that a screen of the navigation apparatus be constructed in the form of a touchpad, so that the screen of the navigation apparatus can perform functions of the input unit 20 and the display unit 30.

In addition, the navigation apparatus according to the present invention comprises a data storage unit 40 for storing a variety of data needed for driving the navigation apparatus. At this time, the data storage unit 40 includes a map storage portion 42 for storing map information. In addition, the data storage unit 40 includes a search information storage portion 44 for storing route search time versus distance. That is, the search information storage portion 44 stores information on the route search time versus distance in the form of a table as shown below, in which the information is preferably stored and divided according to a short distance search case and a long distance search case, as shown in Tables 1 and 2.

[Table 1]

| - Short distance search - | |
| --- | --- |
| Search distance (Km) | Search time (Sec) |
| 0 to 2 | 2 |
| 2 to 5 | 5 |
| 5 to 10 | 9 |
| 10 to 20 | 13 |
| 20 to 30 | 18 |
| 30 to 40 | 23 |

[Table 2]

| - Long distance search - | |
| --- | --- |
| Search distance (Km) | Search time (Sec) |
| 40 to 100 | 25 |
| 100 to 200 | 30 |
| 200 to 300 | 35 |
| 300 to 400 | 40 |
| 400 or more | 43 |

The search times shown in the tables are preferably stored as times that are obtained through experiments, since search time varies depending on a device type, i.e., types of stored maps, processing speed of CPU, and the like. Accordingly, navigation apparatuses of different models preferably store different tables, respectively.

In addition, the search times of the tables are stored and divided according to a short distance search case and a long distance search case, since the search time shows different aspects according to the short distance search case and the long distance search case. That is, in case of the short distance search that is performed within a range of a city, since the roads in the downtown area are complicated, a relatively long search time is required for a given distance. In case of the long distance search, since a route includes monotonous sections such as highways, a relatively short search time is required for a given distance.

The data storage unit 40 stores map information and search information, and such information should be upgraded. Accordingly, since the data storage unit 40 should maintain the stored information and update the information regardless of supplying power, an electronically erasable programmable read-only memory (EEPROM) or flash memory is preferably used as the data storage unit.

In the meantime, the navigation apparatus according to the present invention comprises a main controller 50 for receiving satellite signals from the GPS receiving unit 10, calculating current location, controlling the operation of the input unit 20 and the display unit 30, retrieving information from the data storage unit 40, and storing new information into the data storage unit.

The main controller 50, which is a unit for re-searching for a route if the current location is deviated from a searched route. When the route is re-searched for, the main controller 50 calculates a search time from the search information storage portion 44 based on velocity of the navigation apparatus and determines the location of the navigation apparatus after the completion of the route re-search. At this time, the velocity is a concept including both moving speed and direction.

Accordingly, the main controller 50 searches for a new route that starts from the location after the completion of the re-search.

Meanwhile, a method of storing experimental values in the search information storage portion 44 in the form of a table is described as a method of calculating the search time. However, alternatively, the main controller 50 can calculate the search time from functional expressions.

The main controller 50 is provided with two functional expressions for the short distance search and the long distance search and calculates a re-search time using each functional expression according to the re-search distance.

At this time, the reason of using the two separate functional expressions is described above. Upon review of the experimental data, it can be understood that both of the search distance and the search time linearly vary from the distance of 40 Km.

This can be described as functional expressions, i.e., mathematical expressions shown below.

$$[ \text{ Mathematical expression } 1]$$

$$\text{- Short distance time function (in case of short distance search) -}$$

$$T = a1x + b1$$

$$[ \text{ Mathematical expression } 2]$$

$$\text{- Long distance time function (in case of long distance search) -}$$

$$T = a2x + b2$$

Here, T denotes re-search time, x denotes re-search distance, b1 and b2 denotes essential time that is required regardless of distance when searching for a route, and a1 and a2 denotes a gradient calculated by experiments.

This means that the experimental values are linear, and if the experimental values form a different pattern other than linearity, the experimental values may be in the form of a log or quadratic function.

Hereinafter, the operation of the navigation apparatus according to the present invention will be described in detail according to a re-search procedure.

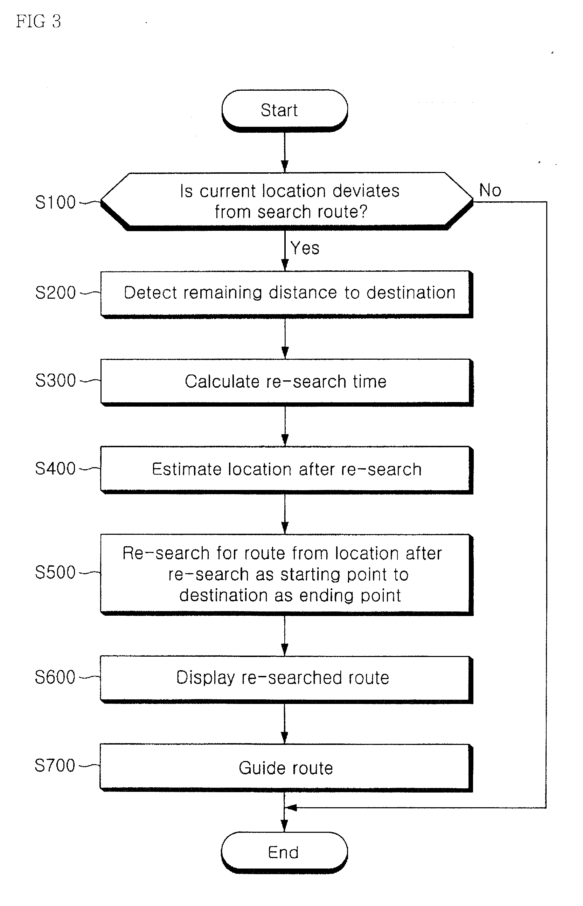

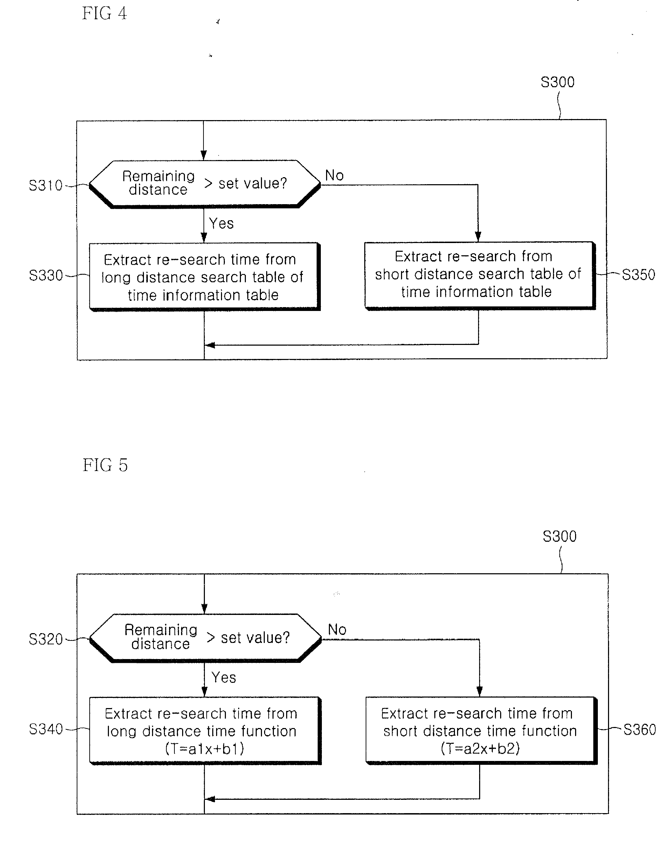

Fig. 3 is a flowchart illustrating a route re-search method according to the preferred embodiment of the present invention, Fig. 4 is a flowchart illustrating in detail a method of calculating re-search time according to the preferred embodiment of the present invention, and Fig. 5 is a flowchart illustrating in detail another method of calculating re-search time according to the preferred embodiment of the present invention.

As shown in the flowcharts, the route re-search method of the navigation apparatus according to the present invention starts from determining whether the current route is deviated from a searched route (step S100). In order to determine whether the current route is deviated from the searched route, the main controller 50 determines whether the current location of the navigation apparatus is deviated from the set route by more than an allowable value. At this time, the allowable value is adopted in consideration of errors of the navigation apparatus itself or the like.

As a determination result in step S100, if the current route of the navigation apparatus is deviated from a searched route, the main controller 50 re-searches for a route and detects remaining distance to the destination (step S200). Since a general navigation apparatus always checks the remaining distance and displays it to the user, the aforementioned information is preferably used as is.

Next, the main controller 50 calculates the time required to re-search for a route (step S400). A method of calculating the re-search time includes a method of searching for the re-search time from the search information storage portion 44 provided in the data storage unit 40 and a method of directly calculating the re-search time by the operation of the functional expression, which will be described in order.

First, as shown in Fig. 4, upon review of the method of searching for the re-search time from the search information storage portion 44, the main controller 50 compares the search distance with a set value (step S310). At this time, the set value, which is a value for dividing a short distance search and a long distance search from each other, is preferably set to a distance corresponding to the maximum distance of a large city in general. In case of Korea, the set value is preferably set to a distance including the longitudinal or transverse distance of Seoul. The set value is preferably set to about 40 Km based on the experimental data of Tables 1 and 2 described above. However, this is only an example, and the set value can be varied according to positional differences or properties of the apparatus.

As a comparison result in step S310, if the remaining distance is larger than the set value, it is a long distance search case. Thus, the re-search time is calculated from the long distance search table among the time information tables (step S330).

Contrarily, as a comparison result in step S310, if the remaining distance is not larger than the set value, it is a short distance search. Thus, the re-search time is calculated from the short distance search table among the time information tables (step S350).

Next, as shown in Fig. 5, upon review of the method of calculating a re-search time from a functional expression, the main controller 50 first compares the search distance with a set value (step S320). At this time, the set value is a value for dividing a short distance search and a long distance search from each other, which is as described above.

As a comparison result in step S320, if the remaining distance is larger than the set value, it is a long distance search case, whereby the re-search time is calculated by the long distance time function (referring to mathematical expression 2) (step S340). If the remaining distance is not larger than the set value, it is a short distance search case, whereby the re-search time is calculated by the short distance time function (referring to mathematical expression 1) (step S360).

After the re-search time is calculated in this manner, the location after the completion of the re-search is estimated (step S400). The location can be estimated by calculating the location after the navigation apparatus moves at the current velocity during the re-search time. That is, assuming that the navigation apparatus moves in the current direction at the current speed during the re-search time, the location after the completion of the re-search is calculated.

As described above, after the location after the completion of the re-search is estimated, the estimated location is set to the starting point and an input destination is set to the ending point, so that a route is re-searched for (step S500).

When the re-search is completed, the main controller 50 shows the re-search result to the user through the display unit 30 (step S600) and guides the route again (step S700).

Hereinafter, the practical operation of the route re-search of the navigation apparatus described above will be explained in detail through an example.

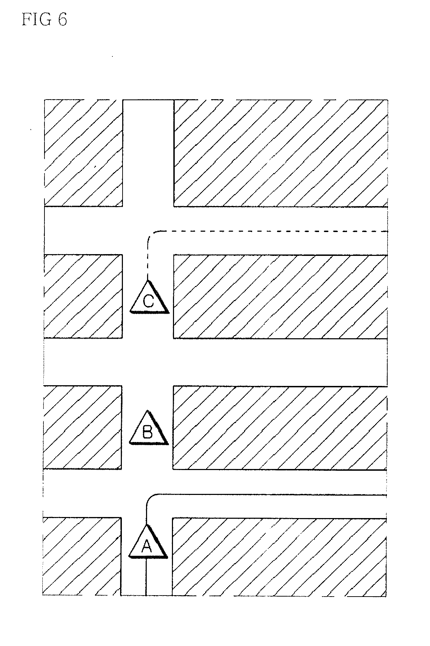

Fig. 6 is a view showing an example of re-searching for a route according to the preferred embodiment of the present invention.

As shown in the figure, when the location of the navigation apparatus is changed from point "A" to point "B", the navigation apparatus detects that it is deviated from the route, and re-searches for a route. At this time, the route displayed as a solid line is the existing route. That is, if the navigation apparatus moves to point "B" after being deviated from the existing route, a route is re-searched for.

At this time, the main controller 50 calculates a re-search time using the search distance of the navigation apparatus. Then, the location of the navigation apparatus after the re-search time is estimated based on the moving velocity. At this time, the estimated location of the navigation apparatus corresponds to point "C" shown in the figure.

Accordingly, the main controller 50 re-searches for a route after setting the starting point to the point "C". Then, if the re-search is completed, the location of the navigation apparatus is changed to point "C". That is, the moment the navigation apparatus arrives at point "C", a route from point "C" to the destination is re-searched for and displayed to the user.

In the detailed descriptions of the present invention, the navigation apparatus includes not only a navigator for guiding a route, but also a variety of electronic devices, such as a personal data assistance (PDA), a portable terminal and a mobile personal computer (PC), which have a navigation function.

In the meantime, according to another embodiment, before the current location is deviated from a search route, a virtual path is previously searched for and stored from a point where route deviation is possible. Thereafter, if the current location is deviated from the search route, a route is guided using the virtual path that has been previously searched for.

Hereinafter, the configuration of the other embodiment of the present invention will be described in detail referring to the accompanying drawings.

The navigation apparatus according to the other embodiment of the present invention has a configuration similar to that according to the preferred embodiment of the present invention. However, the present embodiment further comprises a buffer memory for temporarily storing virtual paths.

The virtual path is a route from a virtual point to a destination, wherein the virtual point is searched for against a case where a route is deviated at a point on a search route where route deviation is possible (hereinafter, referred to as a 'turning point'). At this point, the scope of the turning point can be set in a variety of ways (e.g., a right turning point at a crossroad, an upper or lower deck of a double-decker bridge, or the like). However, in the present specification, three types of turning points will be described as examples for convenience of explanation. That is, a left or right turning point at a crossroad and a U-turn point are determined as a turning point.

That is, although there is a left or right turning point, it is not determined as a turning point if the road is not a forked road and thus there is no worry about taking a wrong way.

The virtual path is a route that is extinct if the navigation apparatus does not deviate from the search route or extinct after substituting for the search route if the navigation apparatus is positioned on the virtual path, and it is preferred that the virtual path is temporarily stored in volatile memory.

Accordingly, the type of the buffer memory is not limited, and a volatile memory may be used as the buffer memory.

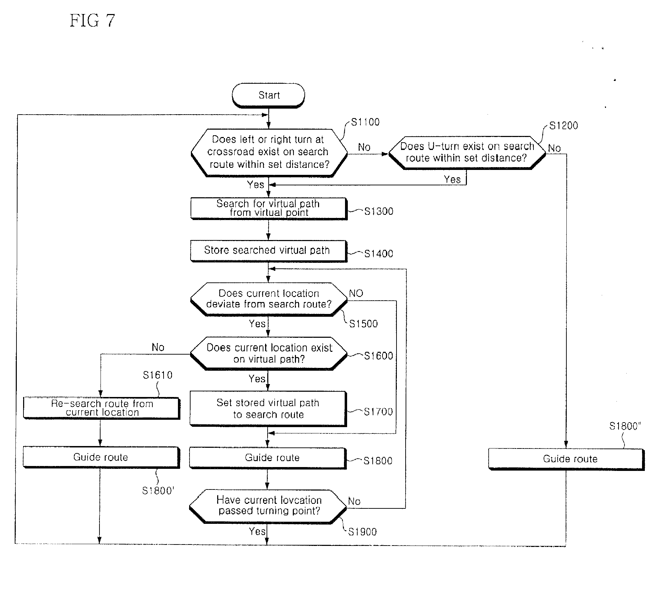

Fig. 7 is a flowchart illustrating a route search method according to another embodiment of the present invention.

Contrary to the preferred embodiment of the present invention, the other embodiment of the present invention starts from determining whether a route for a left or right turn at a crossroad is included in a search route within a set distance (step S1100).

In addition, the navigation apparatus determines whether a U-turn route is included in a search route within a set distance (step S1200).

At this time, the set distance is determined in consideration of the time required for the navigation apparatus to calculate a route. If the set distance is set too long, there are too many virtual paths to be searched for, and thus the burden to the navigation apparatus will be increased, whereas if the set distance is set too short, the navigation apparatus is highly probable to deviate from the search route before the virtual path is set.

If a left, right, or U-turn route is detected in step 1100 or 1200 (i.e., if a turning point exists when it is determined whether a turning point exists within the set distance), the virtual point is set, and then, a virtual path from the virtual point to a destination is searched for (step S 1300).

Here, the virtual point may be a turning point or a certain point on a linear route beyond the turning point.

If a virtual path is searched for, the virtual path is stored in the buffer memory (step S1400).

Next, it is determined whether the location of the navigation apparatus is deviated from the search route (step S 1500).

If it is not deviated from the search route, the guide of the search route is continued (step S1800).

However, if the current location is deviated from the search route, it is determined whether the current location of the navigation apparatus is on the virtual path (step S1600).

Here, if the current location of the navigation apparatus is not on the virtual path, the current location is not on the search route nor on the virtual path, but it is a third location. Therefore, a new route is searched for from the current location (step S1610) and the new route is guided (step S 1800').

However, if the current location of the navigation apparatus is on the virtual path, the virtual path stored in the buffer memory is set to the search route (step S1700). At this time, although not shown, in order to prepare for storing a new virtual path, the buffer memory can be cleared after the virtual path is set to the search route.

In the meantime, after performing step S1700, the modified search route is guided (step S1800).

Thereafter, it is determined whether the current location of the navigation apparatus has passed the turning point (step S1900). If the current location of the navigation apparatus has not passed the turning point, it is continuously determined whether the navigation apparatus deviates from the search route by performing step S1500. If the current location of the navigation apparatus has passed the turning point, step S1100 should be performed in order to detect a next turning point.

In the meantime, as a result in steps S1100 and S1200, if a turning point is not detected, the search route is guided and detection of a turning point is continued.

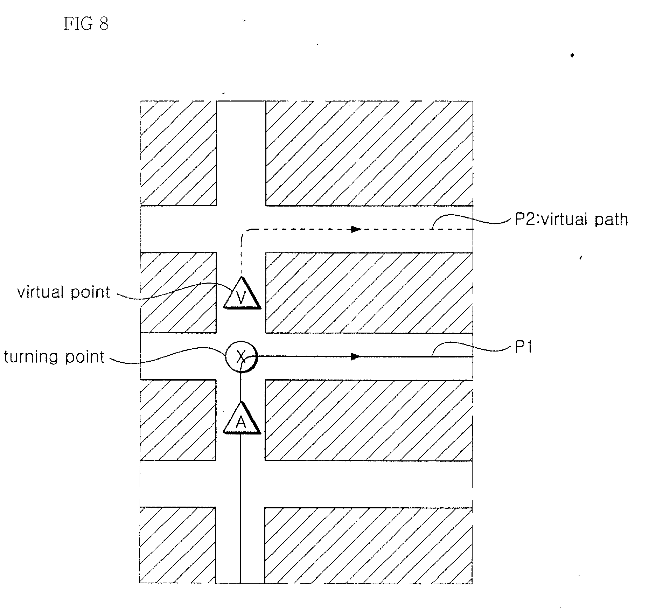

Fig. 8 is an exemplary view showing the operation of the other embodiment of the present invention described above.

As shown in the figure, if a vehicle arrives at point 'A', it is recognized that a turning point exists in front. As a matter of course, it is assumed that the distance between point 'A' and the turning point is within the set distance.

At this time, the existing search route P1 is displayed as a solid line.

If the turning point is detected, the turning point or a point slightly beyond the turning point in the previous moving direction is set to the virtual point, and a new virtual path P2 (a route shown as a dotted line) is searched for using the virtual point as the starting point.

Here, if the turning point is set to the virtual point, continuity of guiding a route can be secured. However, when the navigation apparatus is located at the turning point, even though the navigation apparatus does not deviate from the search route in practice, there is a concern about, the navigation apparatus is determined to deviate from the search route due to GPS receiving errors or the like, thereby setting the virtual path to the search route, which is a matter of concern. However, if the virtual point is set to a point spaced apart from the turning point, even though there is a concern about a momentary discontinuity, the aforementioned problem can be prevented.

If the virtual path is searched for, it is stored in the buffer memory, and it is determined whether the navigation apparatus deviates from the route.

Then, if the navigation apparatus deviates from the route and moves on the virtual path, the search route is set to the virtual path.

In the meantime, if the navigation apparatus passes the turning point without deviation from the search route, the virtual path is deleted and a next turning point is detected.

In addition, if the navigation apparatus proceeds in a third direction (e.g., turns to the left in the drawing), a route is re-searched for from the current location of the navigation apparatus.

From the navigation apparatus and route re-search method thereof according to the present invention described in detail above, the following advantages can be expected.

That is, since when a route is re-searched for, a route from a point where the route re-search is completed to a destination is searched for, even though the navigation apparatus moves during the route search time, the re-searched route corresponds to the location at the completion time of the re-search. Accordingly, a user need not repeatedly re-search for a route, and the user can be guided to a new route while maintaining the moving direction even when the navigation apparatus deviates from the searched route.

Further, in the present invention, from a point where there is a concern about route deviation, a route against the route deviation is previously searched for and stored. When the navigation apparatus actually deviates from the route, the route is immediately reset using the stored route. Therefore, it is advantageous that a user need not wait to be guided to a new route.

Although the present invention has been described and illustrated in connection with the specific preferred embodiments, it will be readily understood by those skilled in the art that various adaptations and changes can be made thereto without departing from the spirit and scope of the present invention defined by the appended claims.

The scope of the present invention is not limited to the embodiment described above but is defined by the appended claims. It will be apparent that those skilled in the art can make various modifications and changes thereto within the scope of the invention defined by the claims.

**Claims**

1. A navigation apparatus, comprising:

    a GPS unit that calculates a current position of the apparatus based on received GPS signals;
    a data storage unit that stores map information; and
    a controller that can calculate a new route based on an estimated starting location and a destination location using the map information, wherein the controller estimates a calculation time required to calculate a new route, wherein the controller estimates where the apparatus will be located after the estimated calculation time expires, and wherein the controller sets the estimated location as the starting location when calculating the new route.

2. The apparatus of claim 1, wherein the controller estimates the calculation time based on a distance from the apparatus to the destination location.

3. The apparatus of claim 2, wherein the data storage unit comprises at least one table that lists estimated route calculation times which correspond to distances from the apparatus to a destination location, and wherein the controller consults the at least one table to estimate the calculation time required to calculate a new route.

4. The apparatus of claim 2, wherein the controller uses a predetermined equation to estimate the calculation time required to calculate a new route.

5. The apparatus of claim 4, wherein the controller uses a first equation to estimate the calculation time required to calculate a new route when a distance from the apparatus to the destination location is less than a predetermined distance, and wherein the controller uses a second equation to estimate the calculation time required to calculate a new route when the distance from the apparatus to the destination location is more than the predetermined distance.

6. The apparatus of any of claims 1 to 5, wherein the controller estimates where the apparatus will be located after the estimated calculation time expires based on a current location of the apparatus, a current speed of the apparatus, and a current travel direction of the apparatus.

7. A navigation apparatus, comprising:

    means for calculating a current position of the apparatus based on received GPS signals;
    means for estimating a calculation time required to calculate a new route to the destination location;
    means for estimating where the apparatus will be located when the estimated calculation time expires; and
    means for calculating a new route between the estimated location of the apparatus and the destination location.

8. A method of calculating a new route to a destination location in a navigation apparatus, comprising:

   calculating a current position of the apparatus based on received GPS signals;
   estimating a calculation time required to calculate a new route to the destination location;
   estimating where the apparatus will be located when the estimated calculation time expires; and
   calculating a new route between the estimated location of the apparatus and the destination location.

9. The method of claim 8, wherein the step of estimating the calculation time comprises:

   determining a distance between the apparatus and the destination location; and
   estimating the calculation time based on the determined distance.

10. The method of claim 9, wherein the step of estimating the calculation time based on the determined distance comprises consulting at least one table that lists estimated route calculation times which correspond to distances from the apparatus to a destination location.

11. The method of claim 9, wherein the step of estimating the calculation time based on the determined distance comprises using a predetermined equation to determine the calculation time required to calculate a new route.

12. The method of claim 11, wherein a first equation is used to estimate the calculation time when the distance from the apparatus to the destination location is less than a predetermined distance, and wherein a second equation is used to estimate the calculation time when the distance from the apparatus to the destination location is more than the predetermined distance.

13. The method of any of claims 8 to 12, wherein the step of estimating where the apparatus will be located when the estimated calculation time expires comprises using the current location of the apparatus, the current speed of the apparatus, and the current travel direction of the apparatus to estimate where the apparatus will be located when the estimated calculation time expires.

14. A navigation apparatus, comprising:

   a GPS unit that calculates a current position of the apparatus based on received GPS signals;
   a data storage unit that stores map information;
   a buffer memory that holds an alternate route to a destination location; and
   a controller that communicates with a user to inform the user about a route that should be followed to the destination location, wherein the controller determines if the apparatus has deviated from a first route to a location on the alternate route, and wherein the controller automatically switches from the first route to the alternate route in the buffer memory when it determines that the apparatus has deviated from the first route to a location on the alternate route.

15. The apparatus of claim 14, wherein the controller calculates an alternate route and stores the alternate route in the buffer memory.

16. The apparatus of claim 15, wherein the controller determines if there is a point of concern where the user may deviate from the first route that is located within a predetermined distance from the apparatus, and wherein if such a point of concern exists within the predetermined distance, the controller calculates an alternate route and stores the alternate route in the buffer memory.

17. The apparatus of claim 16, wherein the controller calculates the alternate route from a location beyond the point of concern to the destination location.

18. The apparatus of claim 16, where the point of concern comprises a turning point.

19. A navigation apparatus, comprising:

   means for calculating an alternate route to a destination location while following a first route;
   means for storing the alternate route in a buffer memory;
   means for determining if the apparatus has deviated from the first route to a location along the alternate route; and

means for automatically switching to the alternate route in the buffer memory if the result of the determining step indicates that the apparatus is at a location along the alternate route.

20. A method of providing route information in a navigation apparatus, comprising :

   calculating an alternate route to a destination location while following a first route;
   storing the alternate route in a buffer memory;
   determining if the apparatus has deviated from the first route to a location along the alternate route; and
   automatically switching to the alternate route in the buffer memory if the result of the determining step indicates that the apparatus is at a location along the alternate route.

21. The method of claim 20, further comprising determining if a potential trouble point exists along the first route, wherein the calculating and storing steps are performed if it is determined that a potential trouble point exists.

22. The method of claim 21, wherein the step of determining if a potential trouble point exists comprises determining if a potential trouble point exists within a predetermined distance from the apparatus.

23. The method of claim 21, wherein the step of calculating an alternate route comprises calculating an alternate route from a location beyond the potential trouble point to the destination location.

FIG 1

FIG 2

- 20 — Input unit
- 30 — Display unit
- GPS receiving unit
- 10
- Main controller — 50
- Data storage unit — 40
  - Map storage portion — 42
  - Search information storage portion — 44

FIG 3

S100 — Is current location deviates from search route? — No

Yes

S200 — Detect remaining distance to destination

S300 — Calculate re-search time

S400 — Estimate location after re-search

S500 — Re-search for route from location after re-search as starting point to destination as ending point

S600 — Display re-searched route

S700 — Guide route

Start

End

FIG 4

S300

S310 — Remaining distance > set value? — No

Yes

S330 — Extract re-search time from long distance search table of time information table

Extract re-search from short distance search table of time information table — S350

FIG 5

S300

S320 — Remaining distance > set value? — No

Yes

S340 — Extract re-search time from long distance time function (T=a1x+b1)

Extract re-search time from short distance time function (T=a2x+b2) — S360

FIG 6

FIG 7

```
                          ┌─────────────┐
                          │    Start    │
                          └──────┬──────┘
                                 │
                                 ▼                                      ┌─S1200
              ┌─S1100                                          ╱                    ╲
         ╱                    ╲                    No    ╱  Does U-turn exist on search ╲  No
    ╱  Does left or right turn at ╲ ───────────────────▶ ╲  route within set distance? ╱ ────┐
    ╲  crossroad exist on search  ╱                       ╲                           ╱      │
    ╲  route within set distance? ╱                                 Yes                       │
         ╲                    ╱                                      │                        │
                 Yes ◀────────────────────────────────────────────────                       │
                  │                                                                           │
                  ▼                                                                           │
        ┌──────────────────────┐                                                             │
        │  Search for virtual path │───S1300                                                 │
        │  from virtual point      │                                                         │
        └──────────┬───────────┘                                                             │
                   ▼                                                                          │
        ┌──────────────────────┐                                                             │
        │ Store searched virtual path │───S1400                                              │
        └──────────┬───────────┘                                                             │
                   ▼                                                                          │
              ╱           ╲                                                                   │
         ╱  Does current location ╲   NO                                                      │
         ╲  deviate from search route? ╱ ──────┐                                              │
              ╲           ╱                     │                                             │
                  Yes                    S1500  │                                             │
                   │                            │                                             │
         No        ▼                            │                                             │
    ┌──────── ╱           ╲                     │                                             │
    │    ╱  Does current location ╲ ───S1600    │                                             │
    │    ╲   exist on virtual path? ╱           │                                             │
    │         ╲           ╱                     │                                             │
  S1610           Yes                           │                                             │
    │              │                            │                                             │
    ▼              ▼                            │                                             │
┌──────────┐  ┌──────────────┐                  │                                             │
│Re-search │  │ Set stored virtual path │──S1700 │                                            │
│route from│  │ to search route         │        │                                           │
│current   │  └──────┬───────┘          │        │                                   S1800"   │
│location  │         │                  │        │                        ┌─────────────┐     │
└────┬─────┘         ▼                  │        │                        │ Guide route │     │
     │         ┌──────────────┐         │        │                        └─────────────┘     │
     ▼         │  Guide route  │──S1800  │        │                                            │
┌──────────┐  └──────┬───────┘         │        │                                             │
│Guide route│         │                 │        │                                            │
└──────────┘         ▼                  │        │                                            │
  S1800'        ╱           ╲           │        │                                            │
           ╱  Have current location ╲  No │        │                                          │
           ╲  passed turning point?  ╱ ───┘        │                                          │
                ╲           ╱                       │                                          │
                    Yes                    S1900    │                                          │
                     │                              │                                          │
                     └──────────────────────────────┴──────────────────────────────────────────┘
```

FIG 8

P2:virtual path

virtual point

P1

turning point